# EUROPÄISCHE PATENTSCHRIFT

(11) **EP 1 186 333 B1**
(45) Veröffentlichungstag und Bekanntmachung des Hinweises auf die Patenterteilung: **07.05.2008**
(21) Anmeldenummer: 01118895.0
(22) Anmeldetag: 17.08.2001
(51) Int. Cl.: B01D 53/04, B01D 53/047

(54) **Einrichtung zur Gewinnung und Speicherung von Sauerstoff**
Apparatus for production and storage of oxygen
Dispositif pour la production et stokage d'oxygène

(30) Priorität: 12.09.2000 DE 20015783 U
(43) Veröffentlichungstag der Anmeldung: 13.03.2002
(73) Patentinhaber: medicap home care GmbH, 35327 Ulrichstein (DE)
(72) Erfinder: Rahn, Günter, 35327 Ulrichstein Babenhausen (DE)
(74) Vertreter: Tappe, Hartmut

(56) Entgegenhaltungen:
- EP-A- 0 860 646
- DE-A- 4 004 831
- US-A- 5 354 361
- US-A- 5 871 564
- US-A- 5 988 165

## Beschreibung

0001 In vielen Bereichen der Technik und der Medizin wird Sauerstoff benötigt, der meist in Hochdruck - Gasflaschen angeliefert wird. Für das Abscheiden von Sauerstoff aus der Luft sind zahlreiche Methoden bekannt. Eine preiswerte und einfach zu handhabende Methode ist das sogenannte Druckwechselverfahren, bei dem Druckluft in Behälter (Tauscher) eingedrückt wird, die mit sehr feinkörnigem Granulat (Molekularsieb) gefüllt sind. Dieses Granulat hat die Eigenschaft, mit steigendem Luftdruck, den Stickstoff der Luft proportional zum Druck, an der Oberfläche des Granulates zu binden. Durch diese Eigenschaft des Granulates, wird ein wesentlicher Teil des in der Luft vorhandenen Sauerstoffes nach einer kurzen Einwirkdauer von 3 bis 5 sec., frei gesetzt. Dieser frei gesetzte Sauerstoff kann, zusammen mit dem Edelgas Argon, das am Granulat auch nicht angelagert wird, über geeignete Ablassöffnungen an den Tauschern, z.B. an Düsen, entnommen werden. Mit dem Ablassen der Druckluft löst sich der Stickstoff vom Granulat, so dass die Druckluft mit einem erhöhten Stickstoffanteil und getrennt davon, der Sauerstoff aus dem Tauscher abgenommen werden können.

0002 Der mit einem Drucklufterzeuger (Kompressor) von z.B. 1,8 bar mit dieser bekannten Methode gewinnbare Sauerstoff hat einen Druck von etwa 0,8 bar. Mit diesem Druck kann weder eine brauchbare Menge Sauerstoff gewonnen und in Gasflaschen oder dgl. gespeichert werden. noch können damit Sauerstoffanlagen die mit einem Druck von 4 bis 6 bar arbeiten, betrieben werden. Es besteht deshalb die Notwendigkeit, dem Tauscher eine Verdichtereinheit nachzuschalten, die das Sauerstoff - Gas auf einen wesentlich höheren Speicherdruck verdichtet. Diese Verdichtereinheit. z.B. ein weiterer Kompressor, erfordert einen zusätzlichen Energieeinsatz mit relativ hoher Antriebsleistung. Bei Benutzung üblicher Kompressoren mit drehenden Teilen, Kolben und Zylindern werden zudem Geräusche verursacht, die in vielen Anwendungsfällen als störend empfunden werden.

0003 Die Erfindung bezieht sich auf eine aus US-A-5354361 bekannte Einrichtung zur Gewinnung und Speicherung von Sauerstoff aus der Luft, unter Einsatz von im Druckwechselverfahren betriebenen Molekularsieben (Tauscher) und einem Kolbenverdichter zur Erhöhung des Druckes. Derartige Kolbenverdichter bestehen aus zwei oder mehr Kolben in Zylindern mit unterschiedlichen Durchmessern. Der Kolben mit dem grösseren Durchmesser wird als Antrieb für den starr mit ihm verbundenen kleineren Verdichtungskolben benutzt, durch den der Sauerstoff komprimiert und in einen Gasbehälter gedrückt wird. Zur Bewegung des Antriebskolbens wird beiderseits des Antriebskolbens Pressluft abwechselnd in den Zylinder eingedrückt und abgelassen. Diese bekannte Einrichtung benötigt für die Bewegung der Kolben erhebliche Energie, weil die in der Druckluft steckende Energie bei jeder Bewegungsumkehr ins Frei abgelassen wird.

0004 Der Erfindung liegt die Aufgabe zugrunde, bei einer Einrichtung der beschriebenen Art die Energieverluste herabzusetzen und damit auch die für die Sauerstoffgewinnung der beschriebenen Art erforderliche Antriebsleistung zu verringern, den Wirkungsgrad zu verbessern und die leistungsabhängigen Antriebsgeräusche weitgehend zu reduzieren, so dass die Einrichtung sowohl dort eingesetzt werden kann, wo wie in Rettungsfahrzeugen nur Energiequellen begrenzter Leistung zur Verfügung stehen, als auch in Räumen, die kein wesentliches Geräusch zulassen, wie dies in Krankenzimmern der Fall ist.

0005 Die Erfindung macht von einer Sauerstoff Gewinnungseinrichtung nach der US-Ps 5 354 361 Gebrauch, bei der unter Einsatz von Molekularsieben, der Sauerstoff aus der Luft abgetrennt und durch Differenz - Kolbenverdichter verdichtet wird. Diese Einrichtung erfordert einen hohen Energieeinsatz und leistungsfähige Antriebe, da die Luft nach dem Durchgang durch die Siebe ungenutzt bleibt und zusätzlichen Energie für den Antrieb der Kolbenverdichter eingesetzt werden muss. Nach der Erfindung werden die Molekularsiebe über Einlassventile von einem Kompressor geladen und über Ablassventile entladen. Gemäss der Erfindung wird damit erreicht, dass der Kompressor (K) einerseits über eine gemeinsame Leitung mit der Antriebskammer des Kolbenverdichters direkt und andererseits über steuerbare Einlassventile mit den Tauschern verbunden ist, so dass die Rückstellkammer des Kolbenverdichters einerseits über gemeinsame Leitungen entladen und andererseits die steuerbaren Einlassventile mit den Tauschern derart verbunden sind, dass mit dem Öffnen eines der Einlassventile, die Antriebskammer über die Leitung zum Druckaufbau in den Tauscher und die Pressluft in die Rückstellkammer entladen wird

0006 Damit wird die mit der Druckluft des geladenen Tauschers aus der gemeinsamen Ladeleitung (7) und dem Steuerzylinder D1 stammende Energie zum Laden der nachfolgenden Verfahrensrhytmen ausgenutzt. Beim Entladen des Tauschers zur Gewinnung des Sauerstoffes, wird die in der Druckluft des Tauschers anstehende Energie über eine gemeinsame Leitung (8) in den Zylinderraum (D1a) entladen und damit zum Rückstellen der Kolben Dk1 eingesetzt. Damit wird ein erheblicher Anteil der bei der bekannten Steuerung ins Freie abgelassenen und damit verlorenen Energie eingespart.

0007 Durch die Verwendung des Laders (K) zugleich als Antrieb für den Kolbenhub des Differenzkolben Verdichters, mit dem auch der Kolbenhub der kleinen Zylinderkammer zur Verdichtung des gewonnen Sauerstoffes verbunden ist, ergibt sich ein verminderter Energiebedarf und damit auch die Möglichkeit den Bedarf an Sauerstoff mit Einrichtungen geringerer Leistung zu decken.

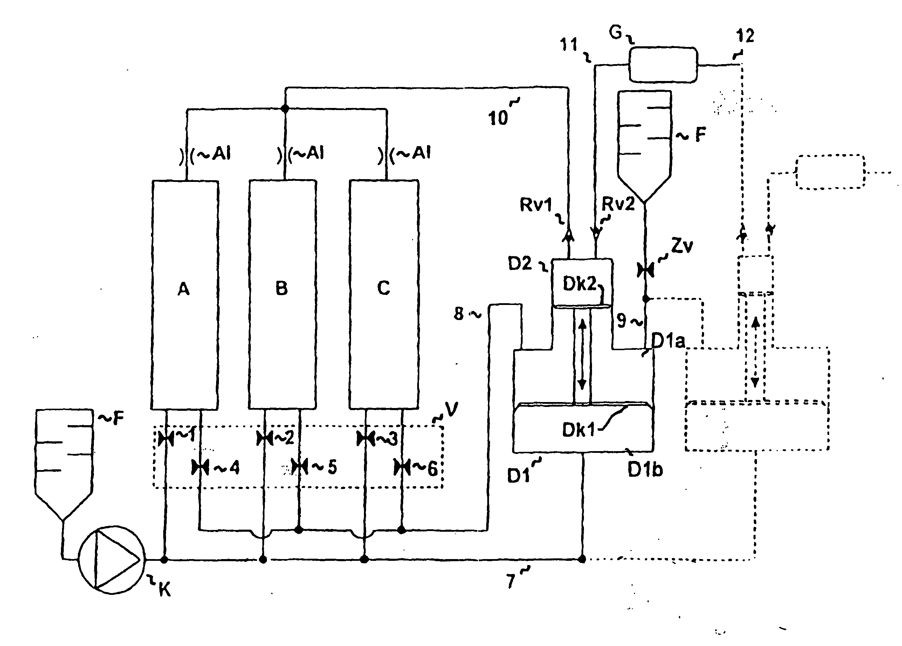

0008 An Hand der Zeichnung sei die Einrichtung nach der Erfindung beschrieben, sowie die Wirkungsweise und die funktionellen Eigenschaften mit den gewünschten Effekten erläutert. Die in der Zeichnung nur als Rechtecke dargestellten Tauscher, sind in der praktischen Ausführung vorzugsweise zylinderförmig ausgebildet und haben gegenüber dem Verdichter wesentlich mehr Volumen.

0009 Die Zeichnung zeigt in schematischer Darstellung drei mit sehr feinem Granulat (Molekularsieb) gefüllte Tauscher A, B, C, die über steuerbare Einlassventile 1, 2, 3 eines Ventilblockes V aus dem Kompressor K mit Druckluft geladen und über die Ablassventile 4, 5, 6 entladen werden. Ein linearer Differenz - Kolbenverdichter D mit den Zylindern D1 und D2 verfügt über Kolben Dk1 und Dk2, die unterschiedliche Durchmesser haben und mechanisch miteinander gekoppelt sind.

0010 Ein steuerbares Abluftventil Zv schliesst den Luftauslass des oberen Zylinderraumes D1 a, wenn der Kolben Dk1 über die durch die Leitung 8 geführte Ablass - Druckluft nach unten bewegt wird.

0011 Sowohl dem Einlass des Kompressors K, als auch dem Luftauslass hinter dem Abluftventil Zv, sind Luftfilter F zugeordnet, die auch als Geräuschdämpfer wirken.

0012 Wird das Ventil 1 bei permanent laufendem Kompressor K geöffnet und sind die Ventile 2 bis 6 geschlossen, so baut sich bei relativ geringer Kompressorleistung über die Verbindungsleitung 7 mit Unterstützung der aus dem Zylinderraum D1 b durch den Kolben DK1 herausgedrückten Luft sehr rasch der im Tauscher A für die Anlagerung von Stickstoff an dem Granulaten erforderliche Druck durch den laufenden Kompressor K über die Leitung 7 im Zylinderraum D1 b auf. Mit der Füllung des Tauschers A wird über die Leitung 7 auch der unter dem Kolben Dk1 liegende Zylinderraum D1 b mit Druckluft gefüllt. Entsprechend dem damit verbundenen Druckanstieg im Bereich von D1 b, werden die miteinander verbundenen Kolben Dk1 und Dk2 nach oben bewegt. Über das Abluftventil Zv wird hierbei die obere Zylinderkammer D1a ins Freie entlüftet. Der mit dem Kolben Dk1 gekoppelte Kolben Dk2 drückt bei dieser Bewegung den in der Zylinderkammer D2 vorhandenen Sauerstoff gegen das Rückschlagventil Rv2 über die Leitung 11 in den Sauerstoffbehälter G.

0013 Nach etwa 3 bis 5 sec. werden die Ventile 2 und 6 geöffnet und das Ventil 1 geschlossen. Der Druck im Tauscher C baut sich über das geöffnete Ventil 6 und die Leitung 8 zur oberen Kammer D1a des Zylinders D1 rasch ab und drückt dabei bei geschlossenem Abluftventil Zv den Kolben Dk1 nach unten. Diese Rückstellbewegung des Kolbens Dk1 benötigt weniger als 1,0 sec., weil durch das Öffnen des Einlassventiles 2 zum Laden des Tauschers B, der Druck im unteren Zylinderraum D1b und in der Leitung 7 rasch z.B. auf 0,3 bar abfällt .Das Einlassventil 2 hat hierfür, ebenso wie die anderen Ventile 1 bis 6, ein wesentlich höheres Durchlassvolumen, als der Kompressor mit z.B. 20 ltr. pro Min füllen kann. Mit dem Kolben Dk1 wird auch der Kolben Dk2 nach unten bewegt. Die Bewegung des Kolbens Dk2 bewirkt einen verminderten Druck in Zylinder D2 und damit ein Abziehen des gewonnenen Sauerstoffes aus den Tauschern über die Ventile Al, die Leitung 10 und das Rückschlagventil Rv1_{.}

Nach dem Abbau des Druckes im Tauscher C über das Ventil 6 und die Leitung 8, baut sich bei geöffnetem Ventil 2 durch den Kompressor K, im Tauscher B und in der unteren Zylinderkammer D1b wieder ein Druck von z.B. 1,8 bar auf, der den Kolben Dk1 bei geöffnetem Ventil Zv nach oben drückt. Damit wird durch den Kolben Dk2, der im Zylinder D2 angesammelte Sauerstoff über das Rückschlagventil Rv2 und die Leitung 11 in die Gasflasche G gedrückt, aus der über die Leitung 12 Sauerstoff entnommen werden kann.

0014 Der durch den Differenz - Kolbenverdichter in der Zylinderkammer D2 gewonnene und damit auch in der Leitung 11 anliegende Druck ergibt sich in etwa aus dem Fülldruck der Tauscher, der auch in der unteren Zylinderkammer D1b an dem Kolben Dk1 anliegt, multipliziert mit der Differenz der Flächen der Kolben Dk1 und Dk2.

0015 Ohne besonderen oder zusätzlichen Aufwand an Kompressorleistung ergibt sich mit der Einrichtung nach der Erfindung, bei einem Fülldruck für die Tauscher von ca. 1,8 bar problemlos ein Speicherdruck von 8 bis 10 bar.

0016 Wird nach kurzer Füllzeit des Tauschers B, das Ventil 2 geschlossen und gleichzeitig das Ventil 4 geöffnet, so baut sich der im Tauscher A anstehende Druck, über die Leitung 8 zum Zylinderraum D1 a ab. Hierdurch wird bei geschlossenem Abluftventil Zv und geöffnetem Einlassventil 3, der Kolben Dk1 - wegen der mit dem Öffnen des Einlassventiles 3 weitgehend drucklos gewordenen Leitung 7 - nach unten bewegt.

0017 Während durch den Kompressor K und der Abwärtsbewegung des Kolbens Dk1, zunächst der Druck über die Leitung 7, bei geöffneten Ventil 3, im Tauscher C, sowie im unteren Teil von Zylinder D1 aufgebaut wird, wird bei geschlossenen Ventilen 5 und 6 und geöffnetem Abluftventil Zv über die Leitung 9 der Druck im oberen Zylinderraum D1 a abgebaut. Die Kolben Dk1 und Dk2 werden mit dem weiteren Füllen des Tauschers C durch den Kompressor K wieder nach oben bewegt. Damit wird der im oberen Zylinder D2 vorhandene Sauerstoff über das Rückschlagventil Rv2 und die Leitung 11 in den Sauerstoffbehälter G gedrückt.

0018 Mit der Einbeziehung des in der Zeichnung dargestellten und erläuterten dritten Tauschers C, ergibt sich ein besonders vorteilhafter Steuerrhytmus, weil immer einer der Tauscher für eine ausreichende Wirkzeit zum Anlagern des Stickstoffes an das Granulat, ohne Gasfluss ist. Bei Einsatz von drei Tauschern ergeben sich aus den Steuerzeiten der Ventile für die Tauscher, auch brauchbare Taktzeiten für den Differenz - Kolbenverdichter.

0019 Mit dem Öffnen des Ventils 5 zum Ablassen der Druckluft aus dem Tauscher B und dem Öffnen des Einlassventiles 1 zum Füllen des Tauschers A wird die beim Füllen des Tauschers B aufgewendete Energie, zur Rückbewegung der Kolben Dk1 und Dk2 benutzt und damit auch zum Füllen des Tauschers A eingesetzt. Mit der Rückbewegung der Kolben Dk1 und Dk2 durch die in der Abluft des Tauschers B steckende Energie, wird die vom Kompressor zum Füllen des Tauschers aufgewendete Energie für die Kolben - Rückbewegung ausgenutzt und damit Energie gespart. Entsprechendes gilt für das Füllen und Entleeren der Tauscher B und C.

0020 Durch den Überdruck am Düsen - Ablass Al der Tauscher A, B, C und die Bewegung des Kolbens Dk2 nach unten, wird der in den Tauschern A, B, C gewonnene Sauerstoff, über die Leitung 10 und das Rückschlagventil Rv1 in den Zylinder D2 transportiert.

0021 Der parallel betriebene - gestrichelt gezeichnete - zweite Verdichter benutzt den Zylinderdurchmesser des unteren Zylinders D1 und einen im Durchmesser entsprechend der gewünschten Drucksteigerung im Durchmesser verkleinerten oberen Zylinder. Der vorverdichtete Sauerstoff wird über die Leitung 12 und einem Rückschlagventil bei einer Kolbenbewegung in die kleine Zylinderkammer eingedrückt. Mit dem Hub der parallel betriebenen Kolben in den grossen Zylindern wird der vorverdichtete Sauerstoff in der gestrichelt gezeichneten kleinen Zylinderkammer auf den gewünschten Druck gebracht. Der beschriebene Betriebsablauf bleibt auch bei dieser Ausführung voll erhalten und damit auch die Ausnutzung der Energie beim Rückstellen der Zylinderkolben und beim Füllen der Tauscher. Vorteilhaft ist es, die Ventile 1 bis 6 als Ventilblock auszubilden auf den die Tauscher bzw. deren Anschlüsse direkt aufgesetzt sind, so dass sie eine stabile Einheit bilden.

0021 Neben dem Vorteil des geringen Leistungsbedarfes und der Geräuscharmut, hat die Einrichtung nach der Erfindung den Vorteil hoher Betriebssicherheit, weil die beweglichen Teile im Bereich konzentrierten Sauerstoffes aus nichtmetallischen Werkstoffen hergestellt werden können und kaum ein gefährlicher Überdruck erzeugt werden kann. Zwar ist die Menge an gewonnenem Sauerstoff pro Zeiteinheit verhältnismässig klein, die Möglichkeit aber, die Einrichtung im Dauerbetrieb laufen zu lassen, ergibt bei geringem Energiebedarf eine hohe Kapazität.

0022 Wegen des Einsatzes von Kompressoren relativ kleiner Leistung ist die Einrichtung zur Gewinnung von Sauerstoff auch für den Einsatz in Krankenwagen und dgl. geeignet, bei denen die Kompressoren für den Lader aus der Batterie der Fahrzeuge gespeist werden können.

0023 Mit einer Einrichtung zur Steuerung der Leistung des Kompressors kann in einfacher Weise auch der gewünschte oder erreichbare Druck für den Sauerstoff angesteuert werden.

## Patentansprüche

1. Einrichtung zur Gewinnung und Speicherung von Sauerstoff aus der Luft, unter Einsatz von im Druckwechselverfahren mit Pressluft betriebenen Molekularsieben / Tauschern, die zur Erhöhung des Sauerstoffdruckes über Einlassventile (1,2,3) von einem Kompressor (K) beladen und über steuerbare Ablassventile (4,5,6) in einen Differenz-Kolbenverdichter (D) entladen werden, der einen eine Antriebskammer (D1b) und eine Rückstellkammer (D1a) aufweisenden Antriebszylinder (D1) mit einem Kolben (Dk1) aufweist und einen weiteren Zylinder (D2) mit einem Kolben (Dk2) von kleinerem Durchmesser als dem Durchmesser des Kolbens (DK1) des Antriebszylinders (D1) hat **dadurch gekennzeichnet, daß** der Kompressor (K), der ein wesentlich niedrigeres Durchlassvolumen als jedes der Ventile (1) bis (6) hat, einerseits über eine gemeinsame Leitung (7) mit der Antriebskammer (D1b) des Kolbenverdichters (D) direkt und andererseits über steuerbare Einlassventile (1,2,3) mit den Tauschern (A,B,C) derart verbunden ist, daß mit dem Öffnen eines der Einlassventile (1,2,3) zum Druckaufbau in einem zu beladenden Tauscher (A,B,C) auch die Antriebskammer (D1b) über die Leitung (7) gleichzeitig beladen wird, und die Pressluft bei der Entladung des zu entladenden Tauschers (A,B,C) über eine allen Abluftventilen (4,5,6) gemeinsame Leitung (8) in die Rückstellkammer (D1a) des Kolbenverdichters abgeführt wird.

2. Einrichtung nach Anspruch 1, **dadurch gekennzeichnet, dass** die beim Entladen eines Tauschers (A,B;C) über die Leitung (8) frei werdende Druckluft, den Kolben (Dk1) des Antriebszylinders (D1) gegen die Druckluft des Laders bis zum Druckausgleich zurück bewegt.

3. Einrichtung nach Anspruch 1 und 2 **gekennzeichnet durch** eine der Rückstellkammer (D1a) zugeordnete, steuerbare Abluftöffnung (Zv), die während der Öffnung eines der Ablassventile (4,5.6) geschlossen ist.

4. Einrichtung nach Anspruch 3, **dadurch gekennzeichnet, dass** mit dem Schliessen der Ablassventile (4,5,6), über die Leitung (7), Druck in der Antriebskammer (D1b) aufgebaut wird.

## Claims

1. A device for the extraction and storage of oxygen from the air using molecular sieves/exchangers operated with compressed air according to the pressure alternating method which, to increase the oxygen pressure, are charged via inlet valves (1,2,3) by a compressor (K) and via controllable discharge valves (4,5,6) are discharged into a differential piston compressor (D), comprising a working cylinder (D1) having a drive chamber (D1b) and a resetting chamber (D1a) with a piston (Dk1) and a further cylinder (D2) with a piston (Dk2) of a lesser diameter than the diameter of the piston (Dk1) of the drive cylinder (D1), **characterized in that** the compressor (K) which has a substantially lower passage volume than each of the valves (1) to (6) on the one hand is directly connected with a drive chamber (D1b) of the piston compressor (D) via a common line (7) and on the other hand is connected via controllable inlet valves (1,2,3) with the exchangers (A,B,C) in such a manner that with the opening of one of the inlet valves (1,2,3) for the pressure build-up in one of the exchangers (A,B,C) to be charged, the drive chamber (D1b) is simultaneously charged via the line (7) and the compressed air on discharging of the exchanger (A,B,C) to be discharged via a line (8) which is common to all discharge valves (4,5,6) is discharged into the resetting chamber (D1a) of the piston compressor.

2. A device according to Claim 1, **characterized in that** the compressed air which is liberated on discharging of an exchanger (A,B,C) via the line (8) moves the piston (Dk1) of the drive cylinder (D1) back against the compressed air of the charger as far as pressure equilibrium.

3. The device according to Claim 1 and 2, **characterized by** a controllable discharge air opening (Zv) associated with the resetting chamber (D1a) which during the opening of one of the discharge valves (4,5,6) is closed.

4. The device according to Claim 3, **characterized in that** with the closing of the discharge valves (4,5,6) via the line (7) pressure is build-up in the drive chamber (D1b).

## Revendications

1. Dispositif de récupération et de stockage d'oxygène à partir de l'air, sous utilisation de tamis/transformateurs moléculaires fonctionnant à l'air comprimé dans le procédé de variation de pression, qui pour l'augmentation de la pression d'oxygène sont chargés par l'intermédiaire de soupapes d'entrée (1, 2, 3) par un compresseur (K) et par l'intermédiaire de soupapes de sortie (4, 5, 6) pilotables sont déchargés dans un compresseur différentiel à piston (D) comportant un vérin d'entraînement (D1) qui comporte une chambre d'entraînement (D1b) et une chambre de rappel (D1a), avec un piston (Dk1) et qui a un vérin (D2) supplémentaire, avec un piston (Dk2) de plus petit diamètre que le diamètre du piston (Dk1) du vérin d'entraînement (D1), **caractérisé en ce que** le compresseur (K) qui a un volume de passage nettement inférieur à celui de chacune des soupapes (1) à (6) est relié directement d'une part par l'intermédiaire d'un conduit commun (7) avec la chambre d'entraînement (D1b) du compresseur à piston ((D) et d'autre part par l'intermédiaire de soupapes d'entrée (1, 2, 3) pilotables avec les transformateurs (A; B; C) de sorte que, à l'ouverture de l'une des soupapes d'entrée (1, 2, 3) pour l'établissement de la pression dans un transformateur (A, B, C) à charger, la chambre d'entraînement (D1b) soit simultanément chargée par l'intermédiaire du conduit (7) et **en ce que** lors de la décharge de l'échangeur (A, B, C) à décharger, par l'intermédiaire d'un conduit (8) commun à toutes les soupapes d'évacuation (4, 5, 6), l'air comprimé soit évacué dans la chambre de rappel (D1a) du compresseur à pistons.

2. Dispositif selon la revendication 1, **caractérisé en ce que** l'air comprimé libéré à la décharge d'un transformateur (A, B, C) par l'intermédiaire du conduit (8) déplace en arrière le piston (Dk1) du vérin d'entraînement (D1) contre l'air comprimé du chargeur, jusqu'à la compensation de pression.

3. Dispositif selon la revendication 1 et 2, **caractérisé par** un orifice d'évacuation (Zv) pilotable, associé à la chambre de rappel (D1a), qui est fermé pendant l'ouverture de l'une des soupapes de sortie (4, 5, 6).

4. Dispositif selon la revendication 3, **caractérisé en ce qu'**à la fermeture des soupapes de sortie (4, 5, 6) via le conduit (7), une pression s'établit dans la chambre d'entraînement (D1b).
